# EUROPEAN PATENT APPLICATION

(11) **EP 2 887 672 A1**
(43) Date of publication of application: **24.06.2015**
(21) Application number: 13306746.2
(22) Date of filing: 17.12.2013
(51) Int. Cl.: H04N 19/70, H04N 19/12, H04N 19/174, H04N 19/30, H04N 19/176, H04N 19/46, H04N 1/60

(54) **Method for coding a sequence of pictures and method for decoding a bitstream and corresponding devices**

(71) Applicant: Thomson Licensing, 92130 Issy-les-Moulineaux (FR)
(72) Inventor: Andrivon, Pierre, 35576 Cesson-Sévigné (FR); Bordes, Philippe, 35576 Cesson-Sévigné (FR); Guillotel, Philippe, 35576 Cesson-Sévigné (FR)
(74) Representative: Huchet, Anne

(57) **Abstract**

A method for encoding a sequence of pictures divided into regions and color transforms is disclosed. The method comprises:
- encoding (10, 20, 20') the pictures of the sequence of pictures into a bitstream;
- encoding (12, 22, 22') in the bitstream a set of at least two color transforms; and
- encoding (14, 24, 24') in the bitstream for at least one region an index for identifying one color transform of the set of at least two color transforms.

## Description

### 1. FIELD OF THE INVENTION

A method for encoding a sequence of pictures divided into regions and color transforms is disclosed. Corresponding decoding method, encoding device and decoding device are further disclosed.

### 2. BACKGROUND OF THE INVENTION

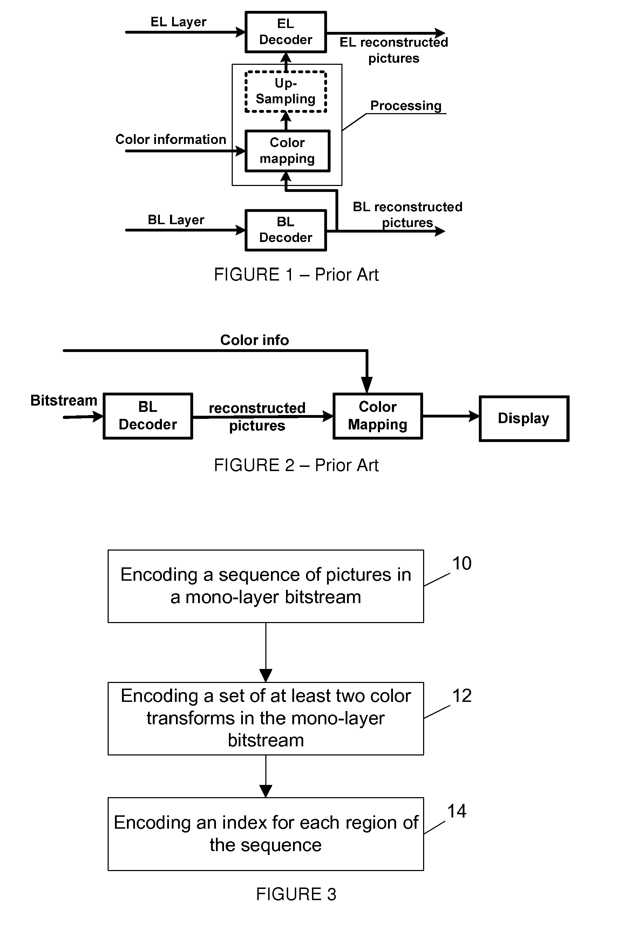

Scalable codecs are known to implement interlayer prediction operations in order to reduce redundancies between layers. **F**igure **1** depicts a scalable decoder adapted to decode a scalable bitstream comprising a base layer BL and one additional layer EL. BL pictures are reconstructed from the base layer. The reconstructed base layer pictures are further processed. The processed pictures are then used to derive predictors for pictures or pictures' regions of the additional layer. Exemplarily, processing the reconstructed base layer pictures comprises applying a color transform when BL pictures and EL pictures are represented using different color gamuts. Processing also comprises upsampling the reconstructed BL pictures when BL pictures and EL pictures have different resolutions.
Such scalable encoding/decoding is suitable for encoding/decoding a first version of a sequence of pictures color-graded on a legacy Rec.709 monitor and a second version of the same sequence of pictures color-graded on a wider and richer colorful reference screen (e.g. DCI-P3 or Rec.2020 reference monitor). In the same way, scalable encoding/decoding is used to encode/decode several versions of a sequence of pictures having different dynamic ranges, e.g. a low dynamic range and a high dynamic range. However, in such cases, applying a global processing on the reconstructed BL pictures may be inappropriate to efficiently predict EL pictures because both versions of the sequence possibly exhibit local characteristics.
As depicted on **Figure 2****,** in video content distribution, a color transform is known to be applied on the reconstructed pictures by a color mapping module so that the mapped pictures are adapted to the end device rendering capability. Again, applying a global color transform on the reconstructed pictures is not efficient because it does not take into account local characteristics of the signal.

There is thus a need to encode colour transforms that take into account the local characteristics of the signal.

### 3. BRIEF SUMMARY OF THE INVENTION

The purpose of the invention is to overcome at least one of the disadvantages of the prior art.
To this aim, a method for encoding a sequence of pictures and color transforms, the pictures being divided into regions is disclosed that comprises:
- encoding the pictures of the sequence of pictures into a bitstream;
- encoding in the bitstream a set of at least two color transforms; and
- encoding in the bitstream for at least one region an index for identifying one color transform of the set of at least two color transforms.

Advantageously, by encoding an index locally for a region local characteristics of the signal are taken into account. In addition, encoding an index instead of encoding a color transform increases coding efficiency.According to a specific characteristic of the invention, the regions belong to the group comprising:
- picture blocks;
- slices; and
- tiles.

According to a particular embodiment of the invention, encoding in the bitstream for at least one region an index for identifying one color transform of the set of at least two color transforms comprises encoding an index for each region of the sequence of pictures, the indices being encoded in auxiliary pictures.

Exemplarily, the set of at least two color transforms is encoded in a supplemental enhancement information message.

According to another embodiment of the invention, the bitstream is a scalable bitstream comprising a base layer and at least one additional layer, and encoding the pictures of the sequence of pictures into the scalable bitstream comprises:
- encoding a first version of the sequence of pictures into the base layer;
- reconstructing at least one region of the first version of the sequence of pictures;
- processing the reconstructed at least one region by applying on the reconstructed at least one region a color transform of the set of at least two color transforms identified by the index encoded for the reconstructed at least one region;
- encoding a second version of the sequence of pictures into the additional layer from the processed at least one region.
Exemplarily, the set of at least two color transforms is encoded at a sequence level or at a picture level.

A method for decoding a bitstream representative of a sequence of pictures divided into regions and of color transforms is further disclosed that comprises:
- decoding a set of at least two color transforms from the bitstream;
- decoding from the bitstream for at least one region an index for identifying one color transform of the set of at least two color transforms; and
- reconstructing the pictures of the sequence of pictures from the bitstream using the decoded index.

According to a specific characteristic of the invention, the regions belong to the group comprising:
- picture blocks;
- slices; and
- tiles.

According to a particular embodiment of the invention, reconstructing the pictures of the sequence of pictures from the bitstream using the decoded index comprises processing the reconstructed pictures of the sequence of pictures by applying on each region a color transform of the set of at least two color transforms identified by the index decoded for the region.

Advantageously, decoding from the bitstream for at least one region an index for identifying one color transform of the set of at least two color transforms comprises decoding an index for each region of the sequence of pictures from auxiliary pictures.
Exemplarily, the set of at least two color transforms is decoded from a supplemental enhancement information message.

According to another embodiment of the invention, the bitstream is a scalable bitstream comprising a base layer and at least one additional layer, and reconstructing the pictures of the sequence of pictures from the bitstream comprises:
- reconstructing at least one region of a first version of the sequence of pictures from the base layer;
- processing the reconstructed at least one region by applying on the reconstructed at least one region a color transform of the set of at least two color transforms identified by the index decoded for the reconstructed at least one region;
- reconstructing a second version of the sequence of pictures from the additional layer and from the processed at least one region.

Exemplarily, the set of at least two color transforms is decoded at a sequence level or at a picture level.

A computer program product is disclosed that comprises program code instructions to execute of the steps of the encoding method according to any of its embodiments when this program is executed on a computer.

A computer program product is disclosed that comprises program code instructions to execute of the steps of the decoding method according to any of its embodiments when this program is executed on a computer.

A processor readable medium having stored therein instructions for causing a processor to perform at least the steps of the encoding method according to any of its embodiments is disclosed.

A processor readable medium having stored therein instructions for causing a processor to perform at least the steps of the decoding method according to any of its embodiments is disclosed.

A coding device for encoding a sequence of pictures and color transforms, the pictures being divided into regions is disclosed that comprises:
- means for encoding the pictures of the sequence of pictures into a bitstream;
- means for encoding in the bitstream a set of at least two color transforms; and
- means for encoding in the bitstream for at least one region an index for identifying one color transform of the set of at least two color transforms.

Advantageously, the device is configured to execute the steps of the method for encoding according to any of its embodiments.

A decoding device for decoding a bitstream representative of a sequence of pictures divided into regions and of color transforms is disclosed that comprises:
- means for decoding a set of at least two color transforms from the bitstream;
- means for decoding from the bitstream for at least one region an index for identifying one color transform of the set of at least two color transforms; and
- means for reconstructing the pictures of the sequence of pictures from the bitstream using the decoded index.

Advantageously, the device is configured to execute the steps of the method for decoding according to any of its embodiments.

A bitstream representative of a sequence of pictures divided into regions and of color transforms is disclosed that comprises an information representative of a set of at least two color transforms and comprising for at least one region an index for identifying one color transform of the set of at least two color transforms.

### 4. BRIEF DESCRIPTION OF THE DRAWINGS

Other features and advantages of the invention will appear with the following description of some of its embodiments, this description being made in connection with the drawings in which:
- Figure 1 depicts a scalable decoder according to the prior art adapted to decode a scalable bitstream comprising a base layer BL and one additional layer EL;
- Figure 2 depicts a video content distribution workflow according to the prior art comprising a color mapping module;
- Figure 3 depicts a method for encoding a sequence of pictures divided into regions and color transforms in a mono-layer bitstream according to a specific and non-limitative embodiment of the invention;
- Figures 4A and 4B depict a method for encoding a sequence of pictures divided into regions and color transforms in a scalable bitstream according to a specific and non-limitative embodiments of the invention;
- Figure 5 depicts a method for decoding a mono-layer bitstream representative of a sequence of pictures divided into regions and of color transforms according to a specific and non-limitative embodiment of the invention;
- Figures 6A and 6B depict a method for decoding a scalable bitstream representative of a sequence of pictures divided into regions and of color transforms according to a specific and non-limitative embodiments of the invention;
- Figure 7A and 7B represents details of the decoding method depicted on figure 6A and 6B respectively;
- Figure 8 represents an exemplary architecture of an encoder configured to encode a sequence of picture in accordance with an exemplary embodiment of the invention;
- Figure 9 represents an exemplary architecture of decoder configured to decode a bitstream in accordance with an exemplary embodiment of the invention.

### 5. DETAILED DESCRIPTION OF THE INVENTION

**Figure 3** depicts a method for encoding, in a mono-layer bitstream, a sequence of pictures and color transforms, the pictures being divided into regions, according to a specific and non-limitative embodiment of the invention. A block, a macroblock, a slice, a CTU (English acronym for Coding Tree Unit) are examples of such regions. CTU is defined in section 3.31 of the HEVC standard document published as ITU-T Rec. H265 in April 2013.

The sequence of pictures may be obtained from a source. According to different embodiments of the invention, the source belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (such as a CCD).
According to different embodiments of the invention, the mono-layer bitstream may be sent to a destination. As an example, the mono-layer bitstream is stored in a local memory , e.g. a video memory or a RAM, a hard disk. In a variant, the mono-layer bitstream is sent to a storage interface, e.g. an interface with a mass storage, a ROM, an optical disc or a magnetic support and/or transmitted over a communication interface, e.g. an interface to a point to point link or a point to multipoint link or a broadcast network.

In a step 10, the pictures of a sequence of pictures are encoded in a mono-layer bitstream. The sequence of pictures is encoded using well-known encoding scheme. Encoding the sequence of pictures usually but not necessarily comprises, for one current region, determining a predictor from already encoded and reconstructed regions belonging either to the same picture as the current region (intra prediction) or from a different picture (inter prediction) stored in a DPB (English acronym of Decoded Picture Buffer). The regions used for the prediction are for example identified using motion vectors. The predictor is subtracted from the current region to form residuals. The residuals are then transformed into coefficients, e.g. by applying a DCT-like transform (DCT stands for "Discrete Cosine Transform") or wavelet transforms, etc. The coefficients are then quantized before being entropy coded into the bitstream. The steps are repeated on all the regions of a picture and on all the pictures to encode the whole sequence. The invention is not at all limited by the way the pictures are encoded.

In a step 12, a set of at least two color transforms is encoded in the bitstream. The color transforms are encoded in a supplemental enhancement information message (known as SEI message) or in user data. Several SEI messages are transmitted, one for each color transform in order to enable local color mapping by applying locally a given color transform. An example of such SEI message known as colour_mapping_info() is disclosed in Table 1 of the application EP2013306291 filed September 23, 2013. The SEI message comprises first parameters that describe the colour mapped output decoded pictures video signal characteristics and second parameters that describe the colour transform. According to a variant, a single SEI message is encoded with several indexed transforms within. In the following, an exemplary embodiment based on the HEVC standard is described. A new syntax element num_color_map_minus1 is encoded in order to indicate the number of color transform in the set of color transforms. Then, each color transform color_transform_data() is indexed and encoded. According to a specific embodiment, the color transform is a color LUT (English acronym of Look Up Table) and is for example encoded by prediction as disclosed in the European patent application EP2013305453 filed April 8, 2013. The color LUT being defined as a lattice of vertices, i.e. as a regular geometrical arrangement of points over an area or in space, encoding the color LUT comprises for a current vertex:
- predicting the color value associated with the vertex from reconstructed color values associated with neighboring vertices; and
- encoding in the bitstream at least one residue computed between the color value of the vertex and its prediction.
According to a variant, the color transform is defined by a GO model (GO stands for "Gain-Offset"), e.g. by a 3x3 matrix plus 3 offsets. In the latter case, 12 values (9 matrix elements and 3 offsets) are encoded in the bitstream for each color transform. These values are encoded for example as disclosed in Table 9 of the European patent application EP2013306291 filed September 23, 2013. The new syntax elements are encoded in a SEI message as disclosed below. The amendment with respect to the general SEI message of Table 1 disclosed in EP2013306291 are in Italics:

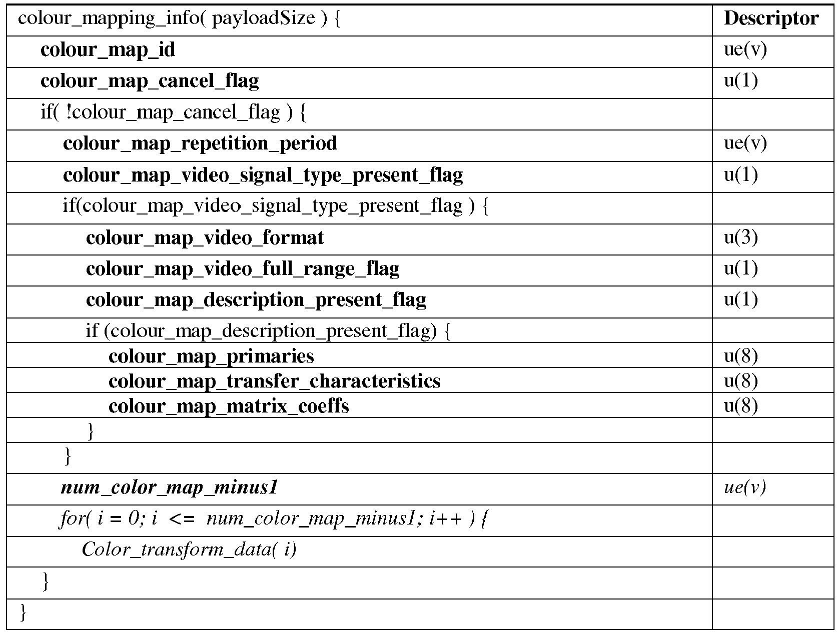

In a step 14, an index is encoded for each region of the sequence of pictures identifying one color transform of the set of at least two color transforms. The selection for a region of one color transform in the set of color transforms is out of the scope of the invention. As an example, the selection of one color transform for a region is based on a RDO criteria (RDO is the English acronym of "Rate Distortion Optimization"). This index is necessary in order to apply locally on the decoder side the appropriate color transform, i.e. the one selected on the encoder side. This index may be encoded at a block level, macroblock level, slice level, tile level or more generally at the level of a picture's region. As an example, the region is a CTU and an index is encoded at the CTU level.
A new syntax element color_map_idx is encoded in order to indicate the color transform associated with a region. One index color_map_idx is encoded for each CTU, CU, tile or slice to be processed. As an example the indices are encoded in an auxiliary picture associated with the coded picture. Advantageously, the auxiliary picture has the same size as the coded picture. The value of color_map_idx for a region is associated with each pixel of the region in the auxiliary picture. Exemplarily, the auxiliary picture is lossless encoded. According to a variant, the auxiliary picture is subsampled. Exemplarily, a single index value is encoded per CTU.
Steps 10, 12, 14 may be done in any order. In particular, step 12 may be done first.

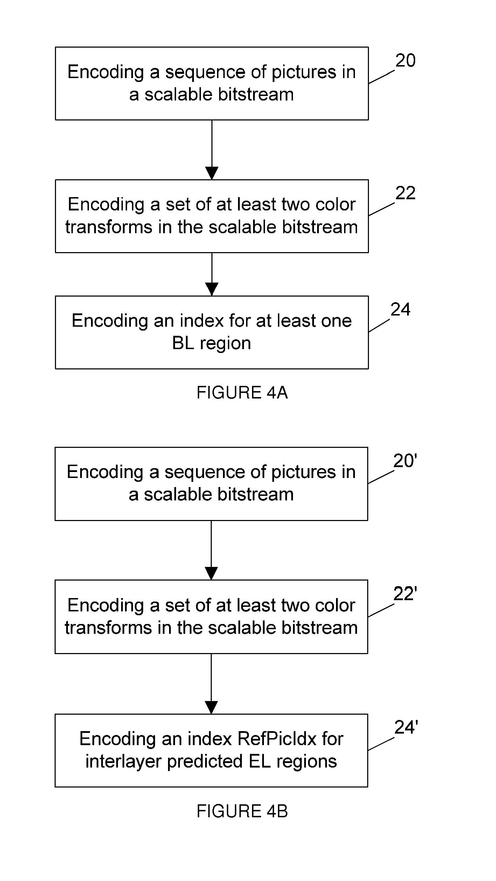

**Figure 4A** depicts a method for encoding a sequence of pictures divided into regions and color transforms in a scalable bitstream according to a specific and non-limitative embodiment of the invention.

The sequence of pictures may be obtained from a source. According to different embodiments of the invention, the source belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (such as a CCD).
According to different embodiments of the invention, the scalable bitstream may be sent to a destination. As an example, the scalable bitstream is stored in a local memory , e.g. a video memory or a RAM, a hard disk. In a variant, the scalable bitstream is sent to a storage interface, e.g. an interface with a mass storage, a ROM, an optical disc or a magnetic support and/or transmitted over a communication interface, e.g. an interface to a point to point link or a point to multipoint link or a broadcast network.

In a step 20, the pictures of a sequence of pictures are encoded in a scalable bitstream comprising a base layer and at least one additional layer. Specifically, a first version of the sequence of pictures is encoded in the base layer and a second version is encoded in the additional layer. The first and second versions may be obtained independently using different workflows. According to a variant, the pictures of the first version are obtained by processing the pictures of the second version, e.g. by tone mapping. The first version is encoded for example by applying the step 10 described above with respect to the mono-layer bitstream. At least one region of the first version, i.e. BL region, is reconstructed and processed by locally applying a color transform of the set of at least two color transforms. EL regions, i.e. regions of EL pictures are encoded. Specifically, a predictor is subtracted from an EL region to get residuals which are transformed into coefficients, quantized and entropy coded in the additional layer. The predictor for an EL region is either a classical intra predictor or an inter predictor derived from already encoded and reconstructed EL regions. According to a variant the predictor is an inter-layer predictor derived from processed BL regions, e.g. from the spatially co-located processed BL region. According to a variant, a non co-located processed BL region is used in the interlayer prediction that is identified by a motion vector. The choice of a type of prediction (intra, inter, interlayer, etc) is for example based on an RDO criteria. The invention is not limited by the way a color transform to be applied locally is selected for a given BL region. As an example, all the color transforms are tested locally for a given BL region and the one that produces the most accurate predictor, i.e. the predictor that better matches the corresponding EL region, is selected for that BL region. A predictor better matches an EL region if for example the SAD (Sum of Absolute Differences) between the predictor and the EL region is the smallest one. The corresponding EL region is the region to be predicted in an EL picture from the BL region processed by the selected transform. According to a variant, the selection of the color transform is achieved externally to the encoding method, e.g. in a pre-processing step.

In a step 22, a set of at least two color transforms is encoded in the bitstream, specifically in the additional layer. The color transforms are encoded for example at the sequence level or at the picture level, e.g. in the picture parameter set (known as PPS). In the following, an exemplary embodiment based on the SHVC standard is described. A new syntax element num_color_map_minus1 is encoded in order to indicate the number of color transforms in the set of color transforms. Then, each color transform is indexed and encoded. According to a specific embodiment, the color transform is a color LUT and is for example encoded by prediction as disclosed in the European patent application EP2013305453 filed April 8, 2013. According to a variant, the color transform is defined by a GO model,

i.e. by a 3x3 matrix plus 3 offsets. In the latter case, 12 values need to be encoded in the bitstream for each color transform as disclosed in Table 9 of the European patent application EP2013306291 filed September 23, 2013. Advantageously, the new syntax elements are encoded in the picture parameter set (PPS) (pic_parameter_set_rbsp()) defined in section F.7.3.2.3 of the SHVC standard defined in document JCTVC-N1008. In the table below only the end of the PPS is indicated. The amendment are in Italics:

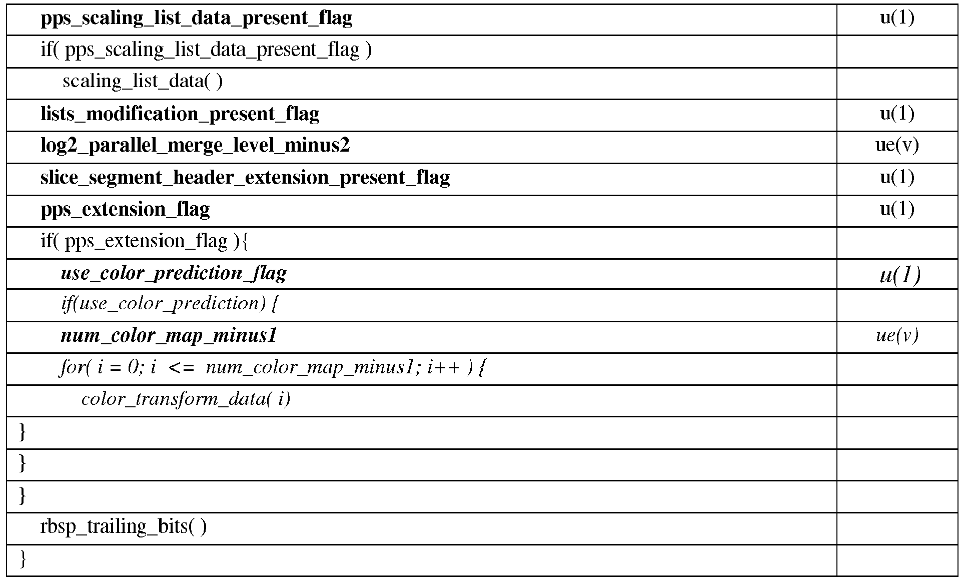

In a step 24, an index is encoded for at least one BL region either directly in the base layer or indirectly in the additional layer. The index is for identifying one color transform of the set of at least two color transforms, i.e. the one used in the processing of the BL region. This index is either encoded in the base layer for each BL region or only for each BL region used in the interlayer prediction process. According to a variant, the index is encoded in the additional layer for each EL region that uses interlayer prediction. When EL and BL pictures have the same resolution, encoding an index in the additional layer for one EL region is equivalent to encoding the index in the base layer for the spatially colocated BL region. When EL and BL pictures have different resolutions, one BL region spatially corresponds to several EL regions after upsampling. In this case, a same index is encoded for the several EL regions or the same index is encoded only once for one of the several regions. This index is necessary in order to apply locally on the decoder side in the interlayer prediction process the appropriate color transform. This index may be encoded at a block level, macroblock level, slice level or tile level. In the following, an exemplary embodiment based on the SHVC standard is described. A new syntax element color_map_idx is introduced in order to indicate the color transform associated with the coding tree unit (known as CTU). The amendment to the syntax are represented in Italics:

| | | | |
|---|---|---|---|
| coding_tree_unit() { | | | **Descriptor** |
| | xCtb = (CtbAddrInRs % PicWidthInCtbsY) << CtbLog2SizeY | | |
| | yCtb = (CtbAddrInRs/ PicWidthInCtbsY) << CtbLog2SizeY | | |
| | if(slice_sao_luma_flag \|\| slice_sao_chroma_flag) | | |
| | | sao(xCtb >> CtbLog2SizeY, yCtb >> CtbLog2SizeY) | |
| | *if(use-color-prediction-flag)* | | |
| | | *color_map_idx* | ae(v) |
| | coding_quadtree( xCtb, yCtb, CtbLog2SizeY, 0) | | |
| } | | | |

The color transforms are for example determined externally to the encoder, e.g. in a pre-processing apparatus. As an example, color transforms are determined locally by dividing the sequence of pictures into regions, e.g. blocks and by applying per block the teachings of European patent application EP2013306372 filed October 03, 2013. The invention is not limited by the way the color transforms of the set of color transforms are determined.
Step 22 may be done before step 20.

**Figure 4B** depicts a method for encoding a sequence of pictures divided into regions and color transforms in a scalable bitstream according to a specific and non-limitative embodiment of the invention.

The sequence of pictures may be obtained from a source. According to different embodiments of the invention, the source belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (such as a CCD).
According to different embodiments of the invention, the scalable bitstream may be sent to a destination. As an example, the scalable bitstream is stored in a local memory , e.g. a video memory or a RAM, a hard disk. In a variant, the scalable bitstream is sent to a storage interface, e.g. an interface with a mass storage, a ROM, an optical disc or a magnetic support and/or transmitted over a communication interface, e.g. an interface to a point to point link or a point to multipoint link or a broadcast network.

In a step 20', the pictures of a sequence of pictures are encoded in a scalable bitstream comprising a base layer and at least one additional layer. Specifically, a first version of the sequence of pictures is encoded in the base layer and a second version is encoded in the additional layer. The first and second versions may be obtained independently using different workflows. According to a variant, the pictures of the first version are obtained by processing the pictures of the second version, e.g. by tone mapping. The first version is encoded for example by applying the step 10 described above with respect to the mono-layer bitstream. Pictures of the first version, i.e. BL pictures, are reconstructed. Each reconstructed BL picture is processed by applying each color transform of a set of at least two color transforms. The outputs of the processing for one reconstructed BL picture are stored in the DPB for the temporally corresponding EL picture. Consequently, in the DPB there are different versions of the same reconstructed BL picture. EL regions, i.e. regions of EL pictures, are then encoded. Specifically, a predictor is subtracted from an EL region to get residuals which are transformed into coefficients, quantized and entropy coded in the additional layer. The predictor for an EL region is either a classical intra predictor or an inter predictor derived from already encoded and reconstructed EL regions or from spatially co-located processed BL regions stored in the DPB. According to a variant, a non co-located processed BL region is used in the interlayer prediction that is identified by a motion vector. In this case, a processed BL picture is considered in the DPB as any other reconstructed EL picture. A picture in the DPB is identified with a reference index noted RefPicldx. Consequently, when locally varying the index RefPicldx in the EL picture to be coded, it is possible to change locally the color transform applied on the spatially co-located reconstructed BL region. As an example, two color transforms CT1 and CT2 are defined to be applied locally. The reconstructed BL picture IBL corresponding to the EL picture to be coded is thus processed by both CT1 and CT2. The two processed pictures CT1 (IBL) and CT2 (IBL) are added in the DPB of the EL picture and identified with two different indices RefPicldx. Consequently, two regions of the EL pictures are encoded by using locally different color transform for the prediction by simply indicating different RefPicldx, e.g. one indicating the picture CT1(IBL) and one indicating the picture CT2 (IBL). In this case, all the color transforms of the set are applied on a given reconstructed BL picture, the local adaptation being made in the additional layer by specifying different picture reference indices possibly referring the same reconstructed BL picture but processed with different color transforms. Usually, the picture in the DPB that produces the most accurate predictor for the EL region, i.e. the predictor that better matches the corresponding EL region, is selected for that EL region. A predictor better matches an EL region if for example the SAD (Sum of Absolute Differences) between the predictor and the EL region is the smallest one. The index RefPicldx is thus for identifying one color transform of the set of at least two color transforms.

In a step 22', the set of at least two color transforms is encoded in the bitstream, e.g. in the additional layer. The color transforms are encoded for example at the sequence level or at the picture level, e.g. in the picture parameter set (known as PPS). In the following, an exemplary embodiment based on the SHVC standard is described. A new syntax element num_color_map_minus1 is encoded in order to indicate the number of color transforms in the set of color transforms. Then, each color transform is indexed and encoded. According to a specific embodiment, the color transform is a color LUT and is for example encoded by prediction as disclosed in the European patent application EP2013305453 filed April 8, 2013. According to a variant, the color transform is defined by a GO model, i.e. by a 3x3 matrix plus 3 offsets. In the latter case, 12 values need to be encoded in the bitstream for each color transform as disclosed in Table 9 of the European patent application EP2013306291 filed September 23, 2013. Advantageously, the new syntax elements are encoded in the picture parameter set (PPS) (pic_parameter_seCrbsp()) defined in section F.7.3.2.3 of the SHVC standard defined in document JCTVC-N1008. In the table below only the end of the PPS is indicated. The amendment are in Italics:

| | | | | |
|---|---|---|---|---|
| | **pps_scaling_list_data_present_flag** | | | u(1) |
| | if(pps_scaling_list_data_present_flag) | | | |
| | | scaling_list_data() | | |
| | **lists_modification_present_flag** | | | u(1) |
| | **log2_parallel_merge_level_minus2** | | | ue(v) |
| | **slice_segment_header_extension_present_flag** | | | u(1) |
| | **pps-extension-flag** | | | u(1) |
| | if(pps_extension_flag){ | | | |
| | | *use_color_prediction_flag* | | *u(1)* |
| | | *if(use-color-prediction){* | | |
| | | ***num_color_map_minus1*** | | *ue*(*v*) |
| | | *for(i = 0; i <= num_color_map_minus1; i*++*){* | | |
| | | | *color_transform_data(i)* | |
| } | | | | |
| } | | | | |
| } | | | | |
| | rbsp_trailing_bits() | | | |
| } | | | | |

In a step 24', an index RefPicldx is encoded for each EL region predicted by interlayer prediction. The RefPicldx directly identifies a picture in the DPB and thus indirectly identifies one color transform of the set of color transforms, i.e. the one used in the processing of the BL region used for the interlayer prediction. Specifically, the RefPicldx indicates one picture in the DPB to be used for the prediction. In the case of inter-layer prediction, RefPicldx thus indicates one color transform used for the prediction.
The step 22' may be done before step 20'. Advantageously, the step 24' is part of the step 20'.

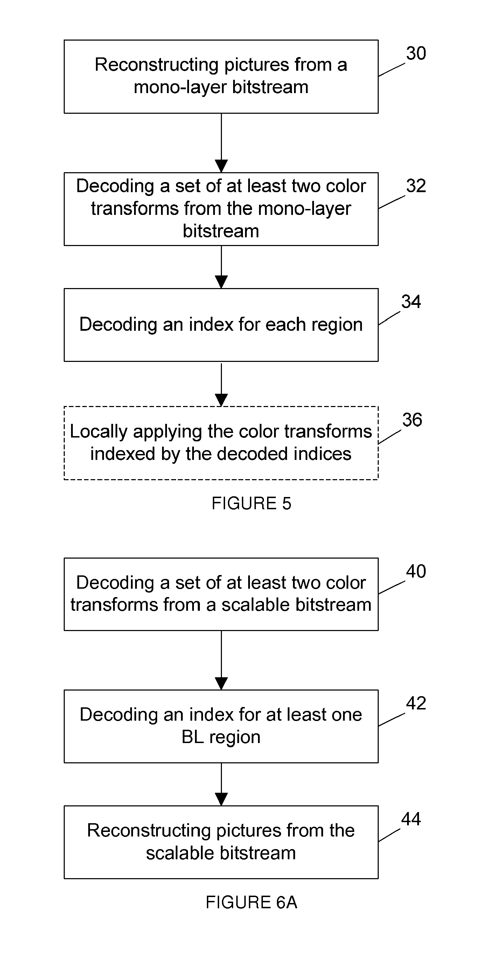

**Figure 5** depicts a method for decoding a mono-layer bitstream representative of a sequence of pictures divided into regions and of color transforms according to a specific and non-limitative embodiment of the invention.
According to different embodiments of the invention, the mono-layer bitstream may be obtained from a source. Exemplarily, the mono-layer bitstream is read from a local memory , e.g. a video memory or a RAM, a hard disk. In a variant, the mono-layer bitstream is received from a storage interface, e.g. an interface with a mass storage, a ROM, an optical disc or a magnetic support and/or received from a communication interface, e.g. an interface to a point to point link or a point to multipoint link or a broadcast network.

The decoded sequence of pictures may besent to a destination. According to different embodiments of the invention, the destination belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface, a HDMI interface) or a wireless interface (such as a IEEE 802.11 interface or a Bluetooth interface); and
- a screen.

In a step 30, the pictures of the sequence of pictures are reconstructed from the mono-layer bitstream. In reference to the decoding, the terms "reconstructed" and "decoded" are very often used as synonyms. The reconstruction comprises entropy decoding of the bitstream to get coefficients. The coefficients are in turn inverse quantized and inverse transformed by applying a transform inverse to the one applied in step 10 of the encoding method (e.g. inverse DCT like transform) to get residuals. Reconstructing the sequence of pictures usually but not necessarily comprises for one current region determining a predictor from already reconstructed regions belonging either to the same picture as the current region (intra prediction) or from a different picture (inter prediction). The regions used for the prediction are for example identified using motion vectors. The predictor is added to the residuals of the current region to form a reconstructed region. The steps are repeated on all the regions of a picture and on all the pictures to reconstruct the whole sequence. The invention is not at all limited by the way the pictures are decoded.

In a step 32, a set of at least two color transforms is decoded from the bitstream. The color transforms are decoded from a supplemental enhancement information message (known as SEI message) or from user data. In order to enable local color mapping by applying locally a given color transform, several SEI messages may be transmitted, one for each color transform. An example of such SEI message known as colour_mapping_info() is disclosed in Table 1 of the application EP2013306291 filed September 23, 2013. The SEI message comprises first parameters that describe the colour mapped output decoded pictures video signal characteristics and second parameters that describe the colour transform. According to a variant, a single SEI message is decoded with several indexed transforms within. In the following, an exemplary embodiment based on the HEVC standard is described. A syntax element num_color_map_minus1 is decoded in order to indicate the number of color transform in the set of color transforms. Then, each color transform color_transform_data() is decoded. According to a specific embodiment, the color transform is a color LUT and is for example decoded by prediction as disclosed in the European patent application EP2013305453 filed April 8, 2013. According to a variant, the color transform is defined by a GO model, e.g. by a 3x3 matrix plus 3 offsets. In the latter case, 12 values are decoded from the bitstream for each color transform for example as disclosed in Table 9 of the European patent application EP2013306291 filed September 23, 2013. The new syntax elements are decoded from a SEI message as disclosed below. The amendment with respect to the general SEI message of Table 1 disclosed in EP2013306291 are in Italics:

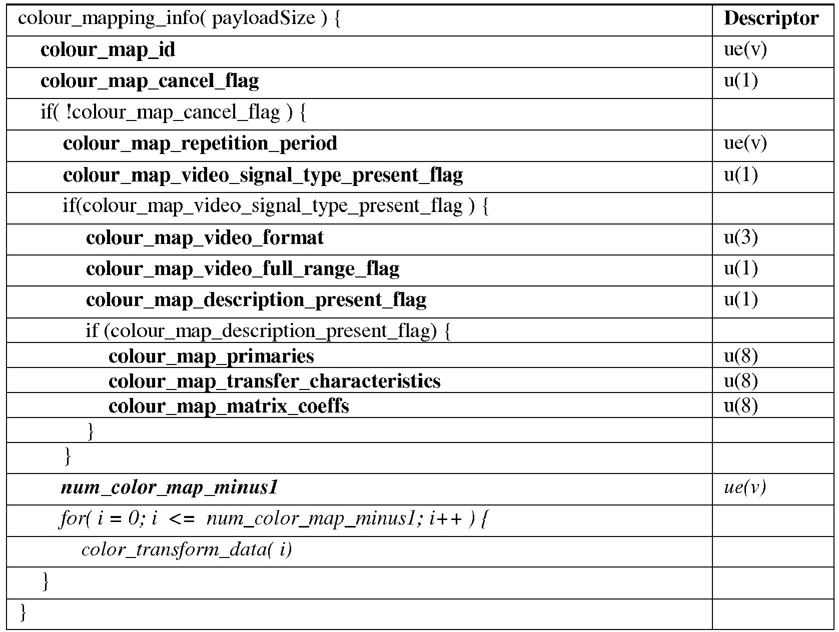

In a step 34, an index is decoded for each region identifying one color transform of the set of color transforms. This index may be decoded at a block level, macroblock level, slice level, tile level or more generally at the level of a picture part. In the following, an exemplary embodiment based on the SHVC standard is described. Specifically, a new syntax element color_map_idx is decoded from the bitstream in order to indicate the color transform associated with the region. One color_map_idx is decoded for each region, i.e. CTU, to be processed. As an example the indices are decoded from an auxiliary picture associated with the coded picture. Exemplarily, the auxiliary picture is decoded without loss. The same variants disclosed with respect to the step 14 of the encoding method apply for the decoding method. The decoded color information, i.e. the set of color transforms and the indices decoded for the regions are advantageously used in a step 36 to remap the colors of the reconstructed pictures for customization to particular display environments as depicted on figure 2. The encoding and decoding methods make it possible to apply color transforms locally instead of applying a global color transform on the whole sequence or pictures. Specifically, for a current region the color transform indexed by the index color_map_idx decoded for that current region is used to remap the colors of that region.
Steps 30, 32, 34 may be done in any order. In particular, steps 32 and 34 may be done first and step 30 at the end.

**Figure 6A** depicts a method for decoding a scalable bitstream representative of a sequence of pictures divided into regions and of color transforms according to a specific and non-limitative embodiment of the invention.
According to different embodiments of the invention, the scalable bitstream may be obtained from a source. Exemplarily, the scalable bitstream is read from a local memory , e.g. a video memory or a RAM, a hard disk. In a variant, the scalable bitstream is received from a storage interface, e.g. an interface with a mass storage, a ROM, an optical disc or a magnetic support and/or received from a communication interface, e.g. an interface to a point to point link or a point to multipoint link or a broadcast network.

The decoded sequence of pictures may be sent to a destination. According to different embodiments of the invention, the destination belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface, a HDMI interface) or a wireless interface (such as a IEEE 802.11 interface or a Bluetooth interface); and
- a screen.

In a step 40, a set of at least two color transforms is decoded from the bitstream. The color transforms are decoded for example at the sequence level or at the picture level, e.g. in the picture parameter set (known as PPS). In the following, an exemplary embodiment based on the SHVC standard is described. The syntax element num_color_map_minus1 is decoded to indicate the number of color transforms in the set of color transforms. Then, each color transform color_transform_data() is decoded. According to a specific embodiment, the color transform is a color LUT and is for example decoded by prediction as disclosed in the European patent application EP2013305453 filed April 8, 2013. According to a variant, the color transform is defined by a GO model, i.e. by a 3x3 matrix plus 3 offsets. In the latter case, 12 values are decoded from the bitstream for each color transform as disclosed in Table 9 of the European patent application EP2013306291 filed September 23, 2013. The new syntax elements are decoded from the picture parameter set (PPS) (pic_parameter_set_rbsp()) defined in section F.7.3.2.3 of the SHVC standard. In the table below only the end of the PPS is indicated. The amendment are in Italics:

| | | | | |
|---|---|---|---|---|
| | **pps_scaling_list_data_present_flag** | | | u(1) |
| | if(pps_scaling_list_data_present_flag) | | | |
| | | scaling_list_data() | | |
| | **lists_modification_present_flag** | | | u(1) |
| | **log2_parallel_merge_level_minus2** | | | ue(v) |
| | **slice_segment_header_extension_present_flag** | | | u(1) |
| | **pps-extension-flag** | | | u(1) |
| | if(pps_extension_flag){ | | | |
| | | *use_color_prediction_flag* | | *u(1)* |
| | | *if(use-color-prediction){* | | |
| | | ***num_color_map_minus1*** | | *ue(v)* |
| | | *for(i = 0; i <= num_color_map_minus1; i*++*){* | | |
| | | | *Color_transform_data(i)* | |
| } | | | | |
| } | | | | |
| } | | | | |
| | rbsp_trailing_bits() | | | |
| } | | | | |

In a step 42, an index is decoded for at least one BL region either directly from the base layer or indirectly from the additional layer. The index is for identifying one color transform of the set of color transforms, i.e. the one used in the processing of the BL region. An index is either decoded from the base layer for each BL region of the first version or for each BL region of the first version used in the interlayer prediction process. According to a variant, the index is decoded from the additional layer for each EL region that uses interlayer prediction. When EL and BL pictures have the same resolution, decoding an index from the additional layer for one EL region is equivalent to decoding the index from the base layer for the spatially colocated BL region. When EL and BL pictures have different resolutions, one BL region spatially corresponds to several EL regions after upsampling. In this case, a same index is decoded for the several EL regions or the same index is decoded only once for one of the several regions. This index is necessary in order to apply locally on the decoder side in the interlayer prediction process the appropriate color transform. This index may be decoded at a block level, macroblock level, slice level or tile level. In the following, an exemplary embodiment based on the SHVC standard is described. The new syntax element color_map_idx is decoded in order to indicate the color transform associated with the coding tree unit (known as CTU). The amendment to the syntax are represented in Italics:

| | | | |
|---|---|---|---|
| coding_tree_unit(){ | | | **Descriptor** |
| | xCtb = (CtbAddrInRs % PicWidthInCtbsY) << CtbLog2SizeY | | |
| | yCtb = (CtbAddrInRs / PicWidthInCtbsY) << CtbLog2SizeY | | |
| | if(slice_sao_luma_flag \|\| slice_sao_chroma_flag) | | |
| | | sao(xCtb >> CtbLog2SizeY, yCtb >> CtbLog2SizeY) | |
| | *if(use_color_prediction_flag*) | | |
| | | ***color_map_idx*** | ae(v) |
| | coding_quadtree(xCtb, yCtb, CtbLog2SizeY, 0) | | |
| } | | | |

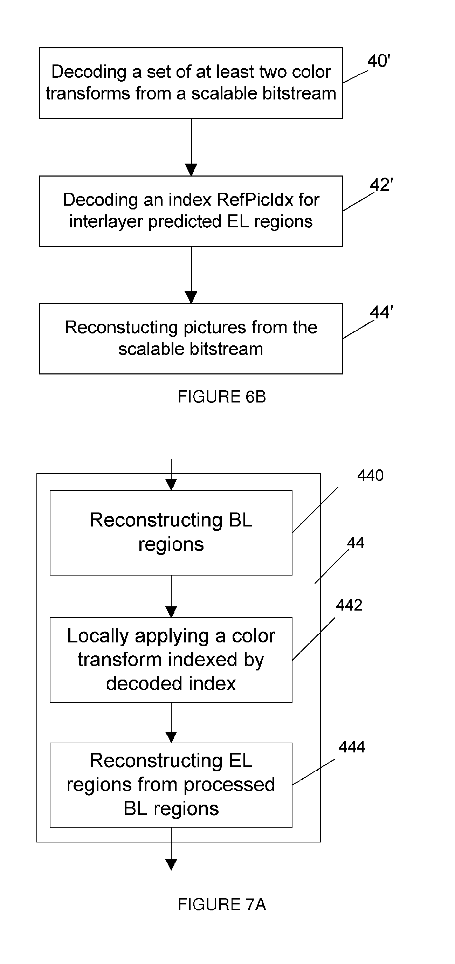

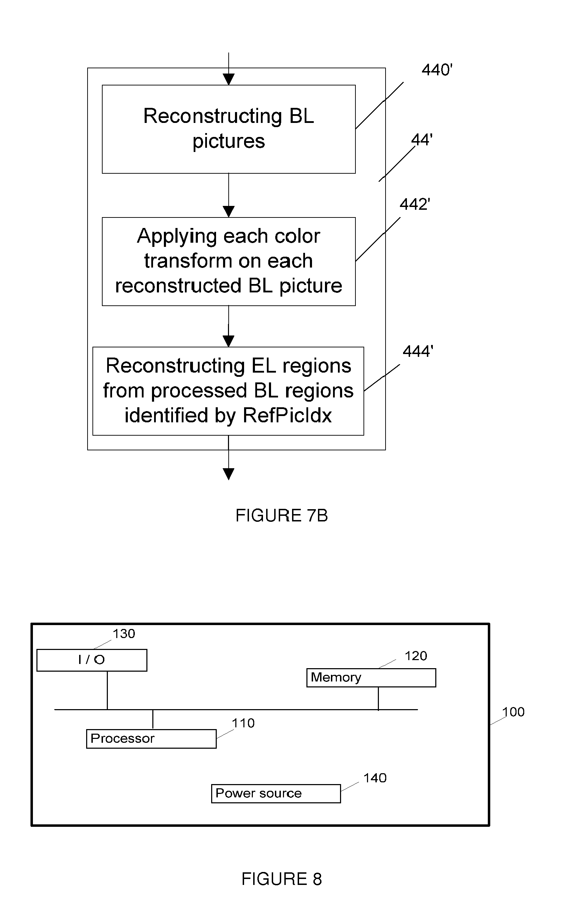

In a step 44, the pictures of the sequence of pictures are reconstructed from the scalable bitstream comprising a base layer and at least one additional layer. Specifically, a first version of the sequence of pictures is reconstructed from the base layer and a second version is reconstructed from the additional layer. **Figure 7** illustrates the step 44 of the decoding method. The first version or only a part of it, i.e. the part used for interlayer prediction, is reconstructed in a step 440 for example by applying the step 30 described above with respect to the mono-layer bitstream. Reconstructed regions of the first version, i.e. BL regions, are processed in a step 442 by locally applying a color transform identified by the index decoded at step 42. EL regions, i.e. regions of EL pictures are decoded in a step 444 possibly from the processed BL regions. Specifically, a predictor is added to residuals to reconstruct an EL region. The residuals are obtained by entropy decoding of the additional layer or a part of it to get coefficients. The coefficients are in turn inverse quantized and inverse transformed by applying a transform inverse to the one applied in the encoding method in order to get residuals. The predictor for an EL region is either a classical intra or inter predictor derived from already reconstructed EL regions. According to a variant the predictor is an inter-layer predictor derived from processed BL regions, e.g. from the spatially co-located processed BL region. According to a variant, a non co-located processed BL region is used in the interlayer prediction that is identified by a motion vector.

**Figure 6B** depicts a method for decoding a scalable bitstream representative of a sequence of pictures divided into regions and of color transforms according to a specific and non-limitative embodiment of the invention.
According to different embodiments of the invention, the scalable bitstream may be obtained from a source. Exemplarily, the scalable bitstream is read from a local memory , e.g. a video memory or a RAM, a hard disk. In a variant, the scalable bitstream is received from a storage interface, e.g. an interface with a mass storage, a ROM, an optical disc or a magnetic support and/or received from a communication interface, e.g. an interface to a point to point link or a point to multipoint link or a broadcast network.

The decoded sequence of pictures may be sent to a destination. According to different embodiments of the invention, the destination belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface, a HDMI interface) or a wireless interface (such as a IEEE 802.11 interface or a Bluetooth interface); and
- a screen.

In a step 40', a set of at least two color transforms is decoded from the bitstream. The color transforms are decoded for example at the sequence level or at the picture level, e.g. in the picture parameter set (known as PPS). In the following, an exemplary embodiment based on the SHVC standard is described. The syntax element num_color_map_minus1 is decoded to indicate the number of color transforms in the set of color transforms. Then, each color transform color_transform_data() is decoded. According to a specific embodiment, the color transform is a color LUT and is for example decoded by prediction as disclosed in the European patent application EP2013305453 filed April 8, 2013. According to a variant, the color transform is defined by a GO model, i.e. by a 3x3 matrix plus 3 offsets. In the latter case, 12 values need to be decoded from the bitstream for each color transform as disclosed in Table 9 of the European patent application EP2013306291 filed September 23, 2013. The new syntax elements are decoded from the picture parameter set (PPS) (pic_parameter_set_rbsp()) defined in section F.7.3.2.3 of the SHVC standard. In the table below only the end of the PPS is indicated. The amendment are in Italics:

| | | | | |
|---|---|---|---|---|
| | **pps_scaling_list_data_present_flag** | | | u(1) |
| | if(pps_scaling_list_data_present_flag) | | | |
| | | scaling_list_data() | | |
| | **lists_modification_present_flag** | | | u(1) |
| | **log2_parallel_merge_level_minus2** | | | ue(v) |
| | **slice_segment_header_extension_present_flag** | | | u(1) |
| | **pps-extension-flag** | | | u(1) |
| | if(pps_extension_flag){ | | | |
| | | *use_color_prediction_flag* | | *u(1)* |
| | | *if(use-color-prediction){* | | |
| | | ***num_color_map_minus1*** | | *ue(v)* |
| | | *for( i = 0; i <= num_color_map_minus1; i*++*){* | | |
| | | | *Color_transform_data(i)* | |
| } | | | | |
| } | | | | |
| } | | | | |
| | rbsp_trailing_bits() | | | |
| } | | | | |

In a step 42', an index RefPicldx is decoded for each EL region predicted by interlayer prediction for identifying one color transform of the set of color transforms, i.e. the one used in the processing of the BL region used for the interlayer prediction. Specifically, the RefPicldx indicates one picture in the DPB to be used for the prediction. In the case of inter-layer prediction, RefPicldx thus indicates one color transform used for the prediction.

In a step 44', the pictures of the sequence of pictures are reconstructed from the scalable bitstream comprising a base layer and at least one additional layer. Specifically, a first version of the sequence of pictures is reconstructed from the base layer and a second version is reconstructed from the additional layer. **Figure 7B** illustrates the step 44' of the decoding method. The first version is entirely reconstructed in a step 440' for example by applying the step 30 described above with respect to the mono-layer bitstream. Each reconstructed BL picture of the first version is processed in a step 442' by applying each color transform of the set of at least two color transforms. The outputs of the processing for one reconstructed BL picture are stored in the DPB for the temporally corresponding EL picture. EL regions, i.e. regions of EL pictures are decoded in a step 444' possibly from the processed BL regions. Specifically, a predictor is added to residuals to reconstruct an EL region. The residuals are obtained by entropy decoding of the additional layer or a part of it to get coefficients. The coefficients are in turn inverse quantized and inverse transformed by applying a transform inverse to the one applied in the encoding method in order to get residuals. The predictor for an EL region is either a classical intra or inter predictor derived from already reconstructed EL regions or from the spatially co-located processed BL region stored in the DPB. According to a variant, a non colocated processed BL region is used in the interlayer prediction that is identified by a motion vector. In this case, a processed BL picture is considered in the DPB as any other reconstructed EL picture. The index RefPicldx decoded for an EL region is thus used to locally vary the color transform applied on a reconstructed BL picture.

Advantageously, the step 42' is part of the step 44'.

**Figure 8** represents an exemplary architecture of an encoder 100 configured to encode, in a mono-layer bitstream or in a scalable bitstream, a sequence of pictures and color transforms in accordance with an exemplary embodiment of the invention, wherein the pictures are divided into regions. The encoder 100 comprises one or more processor(s) 110 , which is(are), for example, a CPU, a GPU and/or a DSP (English acronym of Digital Signal Processor), along with internal memory 120 (e.g. RAM, ROM, EPROM). The encoder 100 comprises one or several Input/Output interface(s) 130 adapted to display output information and/or allow a user to enter commands and/or data (e.g. a keyboard, a mouse, a touchpad, a webcam); and a power source 140 which may be external to the encoder 100. The encoder 100 may also comprise network interface(s) (not shown).

The sequence of pictures may be obtained from a source. According to different embodiments of the invention, the source belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (such as a CCD).
According to different embodiments of the invention, the scalable or mono-layer bitstream may be sent to a destination. As an example, the bitstream is stored in a local memory, e.g. a video memory or a RAM, a hard disk. In a variant, the bitstream is sent to a storage interface, e.g. an interface with a mass storage, a ROM, an optical disc or a magnetic support and/or transmitted over a communication interface, e.g. an interface to a point to point link or a point to multipoint link or a broadcast network.
According to an exemplary and non-limitative embodiment of the invention, the encoder 100 further comprises a computer program stored in the memory 120. The computer program comprises instructions which, when executed by the encoder 100, in particular by the processor 110, make the encoder 100 carry out the encoding method described with reference to figure 3, figure 4A or **4B****.** According to a variant, the computer program is stored externally to the encoder 100 on a non-transitory digital data support, e.g. on an external storage medium such as a HDD, CD-ROM, DVD, a read-only and/or DVD drive and/or a DVD Read/Write drive, all known in the art. The encoder 100 thus comprises an interface to read the computer program. Further, the encoder 100 could access one or more Universal Serial Bus (USB)-type storage devices (e.g., "memory sticks.") through corresponding USB ports (not shown).
According to exemplary and non-limitative embodiments, the encoder 100 is a device, which belongs to a set comprising:
- a mobile device:
- a camcorder;
- an encoding chip; and
- a video server.

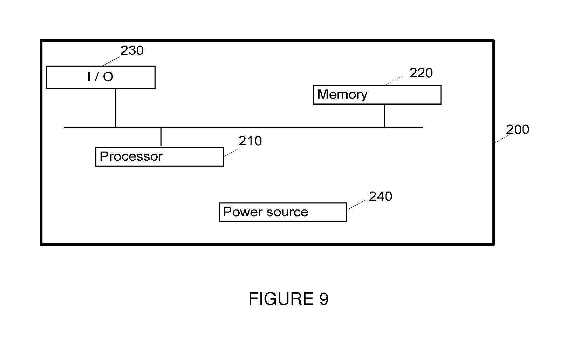

**Figure 9** represents an exemplary architecture of a decoder 200 configured to decode a mono-layer bitstream or a scalable bitstream in accordance with an exemplary embodiment of the invention. The decoder 200 comprises one or more processor(s) 210 , which is(are), for example, a CPU, a GPU and/or a DSP (English acronym of Digital Signal Processor), along with internal memory 220 (e.g. RAM, ROM, EPROM). The decoder 200 comprises one or several Input/Output interface(s) 230 adapted to display output information and/or allow a user to enter commands and/or data (e.g. a keyboard, a mouse, a touchpad, a webcam); and a power source 240 which may be external to the decoder 200. The decoder 200 may also comprise network interface(s) (not shown).
According to different embodiments of the invention, the scalable or mono-layer bitstream may be obtained from a source. Exemplarily, the bitstream is read from a local memory , e.g. a video memory or a RAM, a hard disk. In a variant, the bitstream is received from a storage interface, e.g. an interface with a mass storage, a ROM, an optical disc or a magnetic support and/or received from a communication interface, e.g. an interface to a point to point link or a point to multipoint link or a broadcast network.

The decoded sequence of pictures may be sent to a destination. According to different embodiments of the invention, the destination belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface, a HDMI interface) or a wireless interface (such as a IEEE 802.11 interface or a Bluetooth interface); and
- a screen.
According to an exemplary and non-limitative embodiment of the invention, the decoder 200 further comprises a computer program stored in the memory 220. The computer program comprises instructions which, when executed by the decoder 200, in particular by the processor 210, make the decoder 200 carry out the decoding method described with reference to figure 5, or 6A or 6B. According to a variant, the computer program is stored externally to the decoder 200 on a non-transitory digital data support, e.g. on an external storage medium such as a HDD, CD-ROM, DVD, a read-only and/or DVD drive and/or a DVD Read/Write drive, all known in the art. The decoder 100 thus comprises an interface to read the computer program. Further, the decoder 200 could access one or more Universal Serial Bus (USB)-type storage devices (e.g., "memory sticks.") through corresponding USB ports (not shown).
According to exemplary and non-limitative embodiments, the decoder 200 is a device belonging to a set comprising:
- a mobile device:
- a set top box;
- a TV set;
- a tablet; and
- a decoding chip.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

The invention disclosed for one base layer and one additional layer may be applied on two additional layers of different levels, the layer of lower level playing the role of a base layer towards the additional layer of higher layer.

The processing may also comprise upsampling the reconstructed BL pictures if their resolution is different from the resolution of the EL pictures.

## Claims

1. A method for encoding a sequence of pictures and color transforms, the pictures being divided into regions , the method comprising:
- encoding (10, 20, 20') the pictures of said sequence of pictures into a bitstream;
- encoding (12, 22, 22') in said bitstream a set of at least two color transforms; and
- encoding (14, 24, 24') in said bitstream for at least one region an index for identifying one color transform of said set of at least two color transforms.

2. The method of claim 1, wherein said regions belong to the group comprising:
- picture blocks;
- slices; and
- tiles.

3. The method of claim 1 or claim 2, wherein encoding in said bitstream for at least one region an index for identifying one color transform of said set of at least two color transforms comprises encoding an index for each region of said sequence of pictures, said indices being encoded in auxiliary pictures.

4. The method of claim 3, wherein said set of at least two color transforms is encoded in a supplemental enhancement information message.

5. The method of claim 1 or claim 2, wherein, said bitstream is a scalable bitstream comprising a base layer and at least one additional layer, and wherein encoding the pictures of said sequence of pictures into the scalable bitstream comprises:
- encoding a first version of said sequence of pictures into said base layer;
- reconstructing at least one region of said first version of said sequence of pictures;
- processing said reconstructed at least one region by applying on said reconstructed at least one region a color transform of said set of at least two color transforms identified by said index encoded for said reconstructed at least one region;
- encoding a second version of said sequence of pictures into said additional layer from said processed at least one region.

6. The method of claim 5, wherein said set of at least two color transforms is encoded at a sequence level or at a picture level.

7. A method for decoding a bitstream representative of a sequence of pictures divided into regions and of color transforms comprising:
- decoding (32, 40, 40') a set of at least two color transforms from said bitstream;
- decoding (34, 42, 42') from said bitstream for at least one region an index for identifying one color transform of said set of at least two color transforms; and
- reconstructing (30, 44, 44') the pictures of said sequence of pictures from said bitstream using said decoded index.

8. The method of claim 7, wherein said regions belong to the group comprising:
- picture blocks;
- slices; and
- tiles.

9. The method of claim 7 or claim 8, wherein reconstructing the pictures of said sequence of pictures from said bitstream using said decoded index comprises processing (36) said reconstructed pictures of said sequence of pictures by applying on each region a color transform of said set of at least two color transforms identified by said index decoded for said region.

10. The method of any of claims 6 to 9, wherein decoding from said bitstream for at least one region an index for identifying one color transform of said set of at least two color transforms comprises decoding an index for each region of said sequence of pictures from auxiliary pictures.

11. The method of claim 10, wherein said set of at least two color transforms is decoded from a supplemental enhancement information message.

12. The method of claim 7 or claim 8, wherein, said bitstream is a scalable bitstream comprising a base layer and at least one additional layer, and wherein reconstructing the pictures of said sequence of pictures from said bitstream comprises:
- reconstructing at least one region of a first version of said sequence of pictures from said base layer;
- processing said reconstructed at least one region by applying on said reconstructed at least one region a color transform of said set of at least two color transforms identified by said index decoded for said reconstructed at least one region;
- reconstructing a second version of said sequence of pictures from said additional layer and from said processed at least one region.

13. The method of claim 12, wherein said set of at least two color transforms is decoded at a sequence level or at a picture level.

14. A computer program product comprising program code instructions to execute the steps of the encoding method according to any of claims 1 to 6 when this program is executed on a computer.

15. A computer program product comprising program code instructions to execute the steps of the decoding method according to any of claims 7 to 13 when this program is executed on a computer.

16. A processor readable medium having stored therein instructions for causing a processor to perform at least the steps of the encoding method according to any of claims 1 to 6.

17. A processor readable medium having stored therein instructions for causing a processor to perform at least the steps of the decoding method according to any of claims 7 to 13.

18. A coding device (100) for encoding a sequence of pictures and color transforms, the pictures being divided into regions, the coding device comprising:
- means for encoding (110, 120, 130, 140) the pictures of said sequence of pictures into a bitstream;
- means for encoding (110, 120, 130, 140) in said bitstream a set of at least two color transforms; and
- means for encoding (110, 120, 130, 140) in said bitstream for at least one region an index for identifying one color transform of said set of at least two color transforms.

19. A coding device according to claim 18, wherein said device is configured to execute the steps of the method for encoding according to any of claims 1 to 6.

20. A decoding device (200) for decoding a bitstream representative of a sequence of pictures divided into regions and of color transforms comprising:
- means for decoding (210, 220, 230, 240) a set of at least two color transforms from said bitstream;
- means for decoding (210, 220, 230, 240) from said bitstream for at least one region an index for identifying one color transform of said set of at least two color transforms; and
- means for reconstructing (210, 220, 230, 240) the pictures of said sequence of pictures from said bitstream using said decoded index.

21. A decoding device according to claim 20, wherein said device is configured to execute the steps of the method for decoding according to any of claims 7 to 13.

22. A bitstream representative of a sequence of pictures divided into regions and of color transforms comprising an information representative of a set of at least two color transforms and comprising for at least one region an index for identifying one color transform of said set of at least two color transforms.
